# EUROPÄISCHE PATENTANMELDUNG

(11) **EP 3 871 930 A1**
(43) Veröffentlichungstag der Anmeldung: **01.09.2021**
(21) Anmeldenummer: 20465510.4
(22) Anmeldetag: 28.02.2020
(51) Int. Cl.: B60T 11/16

(54) **BREMSGERÄT FÜR EINE HYDRAULISCHE KRAFTFAHRZEUGBREMSANLAGE**

(71) Anmelder: Continental Teves AG & Co. OHG, 60488 Frankfurt am Main (DE)
(72) Erfinder: Gavrila, George, 60488 Frankfurt am Main (DE); Dinkel, Dieter, 60488 Frankfurt am Main (DE); Cucos, Marius, 60488 Frankfurt am Main (DE); Apetrei, Cristian-Constantin, 60488 Frankfurt am Main (DE); Loghin, Constantin, 60488 Frankfurt am Main (DE)

(57) **Zusammenfassung**

Die Erfindung betrifft ein Bremsgerät (1) für eine Fahrzeugbremsanlage, mit einem Gehäuse (2), welches wenigstens eine Zylinderbohrung (3) mit einer Zylinderbohrungsachse (Z) aufweist, mit einem Kolben (4), welcher in der Zylinderbohrung (3) verschiebbar gelagert ist und darin eine Druckkammer (5) begrenzt, wobei der Kolben (4) durch ein Betätigungsglied (6) betätigbar ist. Um die Herstellung von Bremsgerätvarianten mit mehreren unterschiedlichen Kolbendurchmessern kostengünstiger und effizienter zu gestalten wird erfindungsgemäß vorgeschlagen, dass der Kolben (4) betätigungsseitig einen Antriebsabschnitt (7) zur Aufnahme einer Betätigungskraft aus dem Betätigungsglied (5) und druckkammerseitig einen Abtriebsabschnitt (8) zur Einleitung der Betätigungskraft in ein Druckmittel in der Druckkammer (5) aufweist, wobei im Antriebsabschnitt (7) eine Schnittstelle (9) zur Befestigung oder Abstützung des Betätigungsglieds (6) eingerichtet ist und der Antriebsabschnitt (7) derart ausgelegt ist, dass seine radiale Außenkontur eine Verdrehung des Abtriebsabschnitts (8) um die Zylinderbohrungsachse (Z) verhindert.

## Beschreibung

Die Erfindung betrifft ein Bremsgerät für eine hydraulische Fahrzeugbremsanlage, insbesondere eine Kraftfahrzeugbremsanlage, nach dem Oberbegriff des Anspruchs 1.

Es sind vielfach Bremsgeräte mit einem Hauptzylinder bekannt, bei denen ein Kolben in einer Zylinderbohrung verschoben wird, um in einem Betriebszustand auf eine Druckkammer einzuwirken, weiche mit einem hydraulischen Druckmittel befüllt ist. Dabei ist es bekannt und erforderlich, je nach Bremsgerättyp zumindest bestimmte diskrete Positionen des Kolbens oder seine Bewegung kontinuierlich zu erfassen um diese Information für vielfältige andere Prozesse zu verwenden - beispielsweise Aktivierung eines Bremslichtschalters Ansteuerung eines Bremsgerätantriebs, Modulation von Bremsdruck in einzelnen hydraulischen Kreisen, Funktionskontrolle und vieles mehr.

Zu Erfassung der Lage und/oder Bewegung des Kolbens ist es bekannt, in dem Kolben ein meist magnetisches Geberelement aufzunehmen, welcher die Lage des Kolbens repräsentiert. Eine sehr verbreitete, herstelltechnisch besonders einfache und kostengünstige Lösung stellt dabei ein ring- oder scheibenförmiger Magnet dar, welcher in eine Innenbohrung des Kolbens koaxial zur Kolbenachse eingesetzt wird. Die Position des Geberelements wird von einem Sensorelement erfasst, welches in einem definierten Abstand vom Geberelement in oder an dem Gehäuse des Bremsgeräts außerhalb der Zylinderbohrung angeordnetes angeordnet ist.

Man bemüht sich, Dimensionen und Eigenschaften des Bremsgeräts optimal an die spezifischen Anforderungen des jeweiligen Fahrzeugs und der verwendeten Bremsanlage anzupassen. Bei unterschiedlichen Bremsanlagen benötigen im Bremsbetrieb unterschiedliche Arbeitsvolumina des hydraulischen Druckmittels um beispielsweise unterschiedlich groß dimensionierten Bremssättel zu betätigen. Daher ist es bekannt, Varianten von Bremsgeräten mit unterschiedlichen Durchmessern von Zylinderbohrungen respektive Kolben auszuführen, um beim gleichen Kolbenhub unterschiedlichen Arbeitsvolumina verdrängen zu können. So ist es beispielsweise bekannt, mehrere Varianten von einem Bremsgerät mit Kolbendurchmessern zwischen Ø19mm bis zu Ø28mm oder sogar mehr herzustellen. Bei Verwendung eines größeren Kolbens würde sich jedoch der Abstand zwischen der Achse des Magneten und dem Sensorelement ebenfalls vergrößern und die korrekte Erfassung beeinträchtigen. Um dieses Problem zu lösen ist es bekannt, für Kolbenvarianten mit verschiedenen Durchmessern jeweils gesondert angepasste Geberelemente benötigt werden. Diese führt zu einem erhöhten Herstellaufwand, Werkzeug- und Logistikkosten.

Um solche Kosten zu reduzieren ist es bekannt, das Geberelement für den größten Kolbendurchmesser auszulegen und auch bei den kleineren Kolben einzusetzen. Ein derartiges Geberelement wird zwar auf jeden Fall von dem Sensorelement erfasst, bleibt jedoch überdimensionier. Dies führt jedoch zu einem unnötig erhöhten Materialverbrauch und einem zusätzlichen Kalibrierungsaufwand, wodurch ebenfalls Kosten erhöht werden.

Es stellt sich somit eine Aufgabe, eine verbesserte Lösung für Bremsgeräte mit mehreren unterschiedlichen Kolbendurchmessern vorzuschlagen, welche die vorgenannten Nachteile vermeidet und bei einem reduzierten Materialverbrauch eine zuverlässige Erfassung des Geberelements ermöglicht.

Die Aufgabe wird erfindungsgemäß durch ein Bremsgerät mit der Merkmalskombination nach Anspruch 1 gelöst. Unteransprüche geben weitere vorteilhafte Ausführungen und Weiterbildungen der Erfindung an.

Die Erfindung sieht im Wesentlichen vor, dass eine Drehung des Kolbens innerhalb der Zylinderbohrung konstruktiv verhindert wird, sodass das Geberelement radial in Richtung Sensorelement versetzt angeordnet werden kann. Die Größe des Geberelements kann reduziert werden, ein standardisiertes Element kann zudem für mehrere Kolbengrößen eingesetzt werden. Kosten für Werkstoff, Erstellung Montage und Logistik werden reduziert

Weitere Merkmale und Vorteile der Erfindung ergeben sich aus der nachfolgenden Beschreibung von mehreren Ausführungsbeispielen. Nachstehend zeigten:
Fig.1 ein gattungsgemäßes Bremsgerät nach dem Stand der Technik.
Fig.2 vereinfachte vergrößerte Darstellung des Hauptzylinders gemäß Fig.1 in Längs- und Querschnitt.
Fig.3 vereinfachte Darstellung einer ersten verbesserten Ausführung des Hauptzylinders in Längs- und Querschnitt.
Fig.4 vereinfachte Darstellung einer zweiten verbesserten Ausführung des Hauptzylinders in Längs- und Querschnitt.
Fig.5 vereinfachte Darstellung eines ersten Ausführungsbeispiel eines mehrteiligen Kolbens in Längsschnitt.
Fig.6 vereinfachte Darstellung eines zweiten Ausführungsbeispiel eines mehrteiligen Kolbens in Längsschnitt.

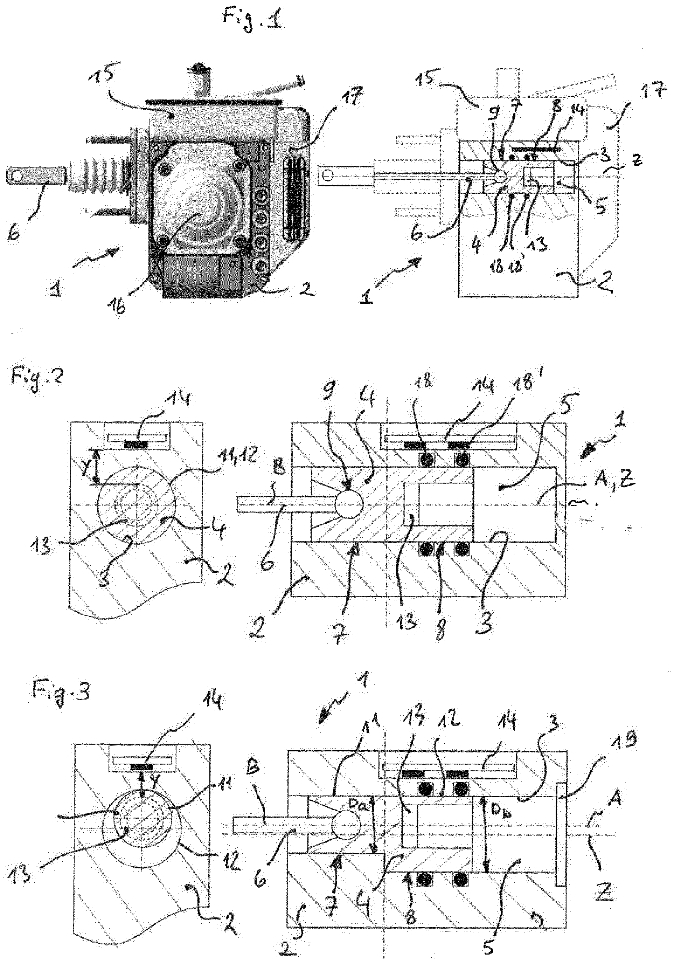

Fig.1 Fig.1 zeigt ein bekanntes gattungsgemäßes Bremsgerät 1 am Beispiel eines fremdangetriebenen kombinierten Aggregats zur Erzeugung und Modulation von Bremsdruck.

Das Bremsgerät 1 verfügt über ein Gehäuse 2 mit einer hier nicht explizit dargestellten Ventilanordnung und einem Hauptzylinder. Der Hauptzylinder weist eine entlang einer Zylinderbohrungsachse Z getriebene Zylinderbohrung 3, in welcher ein Kolben 4 verschiebbar gelagert und durch ein Betätigungsglied 6 betätigt wird. Das Betätigungsglied 6 ist an ein hier nicht gezeigtes Bremspedal gekoppelt, wobei innerhalb der Erfindung auch andere, beispielsweise elektromechanische Betätigungsarten ebenfalls zulässig sind.

Der Kolben 4 begrenzt in der Zylinderbohrung 3 eine mit einem hydraulischen Druckmittel gefüllte Druckkammer 5. Bei dem hier dargestellten Bremsgerät 1 ist die Druckkammer 5 in einem regulären Bremsbetrieb auf eine hier nicht explizit dargestellte Simulatoreinheit aufgeschaltet. Bei einem irregulären Bremsbetrieb, in einer sogenannten Rückfallebene, kann die Druckkammer 5 stattdessen auf die hier ebenfalls nicht dargestellten Radbremsen aufgeschaltet werden und dient so unmittelbar zum Erzeugen von Bremsdruck.

Das dargestellte Bremsgerät 1 verfügt über eine Hauptzylindereinheit mit einem einzelnen Kolben 4. Die Erfindung erstreckt sich jedoch ebenso auf weitere Ausführungen mit mehreren Kolben, beispielsweise mit Tandem-Hauptzylindern.

Auf den jeweils gegenüberliegenden Seiten vom Gehäuse 2 befinden sich eine elektromotorische Antriebseinheit 16, welche zum Aufbau des erforderlichen Bremsdrucks in einem regulären Bremsbetrieb verwendet wird und eine elektronische Steuereinheit 17 zum Ansteuern von Komponenten des Bremsgeräts 1.

Ein Druckmittelbehälter 17 dient zur Versorgung des Bremsgeräts 1 mit einem hydraulischen Druckmittel.

Fig.2 Zur Erläuterung spezifischer mit dem bekannten Stand der Technik eihergehenden Nachteile zeigt die Fig.2 vereinfacht die bekannte Ausführungsform des Hauptzylinders gemäß Fig.1.

Funktionsbezogen weist der Kolben 4 einen Antriebsabschnitt 7 und einen Abtriebsabschnitt 8 auf. Der Antriebsabschnitt 7 dient zum Einleiten eine Betätigungskraft aus dem Betätigungsglied 5 in den Kolben 4 und verfügt hierfür über eine Schnittstelle 9, in welcher das kolbenseitige Ende des Betätigungsglieds 6 befestigt oder zumindest abgestützt ist.

Über einen druckkammerseitigen Abtriebsabschnitt 8 wird die Betätigungskraft an das Druckmittel in der Druckkammer 5 weitergeleitet. Zwei Dichtelemente 18, 18' gleiten bei Betätigung des Kolbens 4 an der Mantelfläche 12 des Abtriebsabschnitts 8 ab und ermöglichen dadurch einen Druckaufbau in der Druckkammer 5.

Ein aus einem Magnetwerkstoff hergestelltes Geberelement 13 ist ebenfalls innerhalb des Abtriebsabschnitts 8 in dem Kolben 4 angeordnet. Bei einer Bewegung des Kolbens 4 erregt ein durch das Geberelement 13 erzeugtes Magnetfeld ein Sensorelement 14, welches in einem definierten Radialabstand zur Zylinderbohrung 3 in dem Gehäuse 2 angeordnet ist. Damit das System dauerhaft korrekten funktioniert, muss der resultierende Abstand y zwischen dem Geberelement 13 und dem Sensorelement 14 stets innerhalb enger Toleranzen gehalten werden.

Der Kolben 4 ist einteilig und rotationssymmetrisch gestaltet, die Mittelachs A des Antriebsabschnitts 7 ist identisch mit der Mittelachse des Abtriebsabschnitts 8, welche im Wesentlichen der Zylinderbohrungsachse Z entspricht, wenn man die geringen Lagetoleranzen aufgrund der Elastizität von Dichtelementen 18, 18' außer Acht lässt. Aufgrund seiner rotationssymmetrischen Gestalt kann sich der Kolben 4 im Betrieb willkürlich um die Zylinderbohrungsachse Z drehen. Um stets ein korrektes Magnetfeld für jeden Drehwinkel des Kolbens 4 innerhalb der Zylinderbohrung 3 zu gewährleisten, muss das Geberelement 13 daher nicht nur eine bestimmte Mindestgröße haben, sondern konzentrisch zur Zylinderbohrungsachse Z aufgebaut und angeordnet sein - beispielsweise scheibenförmig oder ringförmig.

Fig.3 In der Fig.3 ist eine erste erfindungsgemäße Ausführungsform des Hauptzylinders des Bremsgeräts 1 abgebildet. Im Unterschied zu der bekannten, vorstehend beschriebenen Ausführung ist der Kolben 4 nicht mehr vollständig rotationssymmetrisch gestaltet. Die Außenkonturen des Antriebsabschnitt 7 und des Abtriebsabschnitts 8 sind beide kreisrund, jedoch mit unterschiedlichen Außendurchmessern und in radiale Richtung zueinander versetzt ausgebildet.

So ist der Abtriebsabschnitt 8 im Wesentlichen koaxial zur Zylinderbohrungsachse Z gestaltet und weist eine zylindrische Mantelfläche 12 mit einem Durchmesser Db auf, welcher an den Innendurchmesser der Zylinderbohrung 3 angepasst ist.

Der Antriebsabschnitt 7 verfügt über eine zylindrische Mantelfläche 11 mit einem kleineren Durchmesser Da (Da<Db). Die Mittelachse A des Antriebsabschnitts 7 verläuft achsparallel mit einem radialen Versatz V zur Zylinderbohrungsachse Z. Entsprechend ist der Antriebsabschnitt 7 in einem gesonderten Bohrungsabschnitt geführt, welche ebenso achsparallel radial versetzt zur Zylinderbohrungsachse Z in dem Gehäuse 2 positioniert ist.

Aufgrund der Nichtkoaxialität der beiden Abschnitte 7 und 8 wird erreicht, dass der Kolben 4 sich in der Zylinderbohrung 3 nicht mehr um die Zylinderbohrungsachse Z drehen kann. Weil der Kolben 4 nun gegenüber dem Sensorelement 14 stets in einer eindeutigen diskreten Umfangsposition beziehungsweise Drehwinkel bezüglich der Zylinderbohrungsachse Z betätigt wird, kann das Geberelement 13 innerhalb des Abtriebsabschnitts 8 radial in Richtung Sensorelement 14 um einen Radialversatz V versetzt und somit möglichst nahe des Sensorelements 14 angeordnet werden. Dadurch kann das Geberelement 13 ohne Funktionsverlust insgesamt kleiner dimensioniert werden. Für verschiedene Durchmesser des Kolbens 4 kann derselbe Geberelement 13 verwendet werden, indem der Versatz V jeweils so gewählt wird, dass der Abstand y zum Sensorelement 14 unabhängig vom Kolbendurchmesser konstant bleibt.

Daher kann das Geberelement 13 derart radial versetzt in dem Kolben 4 angeordnet sein, dass der radiale Abstand y zwischen dem Geberelement 13 und dem Sensorelement 14 unter Berücksichtigung der erforderlichen Mindestwandstärken am geringsten ist.

Um die Herstellung der erforderlichen Bohrungen für den Kolben 4 einfacher zu gestalten, sollte der Versatz V kleiner als die Hälfte der Durchmesserdifferenz der beiden Abschnitte 7 und 8 sein (V≤(Db-Da)/2), denn dadurch bleibt der Querschnitt des Antriebsabschnitts 7 vollständig innerhalb des Querschnitts des Abtriebsabschnitts 8.

Um einen derart gestalteten Hauptzylinder montieren zu können, ist ein gesonderter Stopfen 19 erforderlich, welcher nach dem Einbau des Kolbens 4 in die Zylinderbohrung 3 montiert wird, um die Zylinderbohrung 3 zu verschließen.

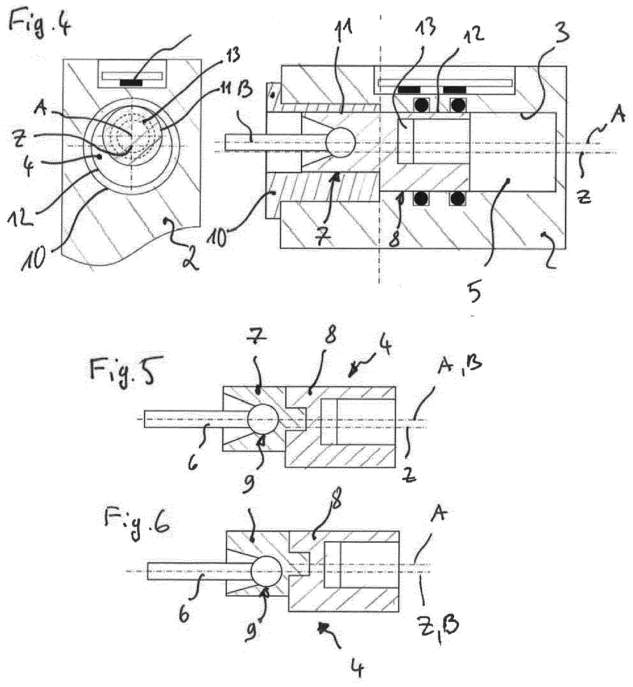

Fig.4 Fig.4 zeigt eine Abwandlung der Ausführungsform gemäß Fig.3.

Zur Vereinfachung der Herstellung von dem Gehäuse ist der Kolben 4 mit dem Antriebsabschnitt 7 in einer gesonderten Führungsbuchse 10 in Axialrichtung verschiebbar und in Umfangsrichtung verdrehfest geführt. Die Führungsbuchse 10 ist verdrehfest in dem Gehäuse 2 aufgenommen, ihre Innenkontur ist komplementär zur Außenkontur des Antriebsabschnitts 7 und somit nicht konzentrisch zur Zylinderbohrungsachse Z gestaltet.

Dadurch stützt sich der Kolben 4 mit seinem Antriebsabschnitt 7 in Umfangsrichtung an der Führungsbuchse 10 ab, seine Drehung um die Zylinderbohrungsachse Z wird somit unterbunden.

Die Innenkontur der Führungsbuchse 10 ist an die Außenkontur des Antriebsabschnitts 7 angepasst, wogegen ihre Außenkontur koaxial zur Zylinderbohrung 3 ausgebildet ist und einen größeren Durchmesser aufweist. Dadurch wird die Zylinderbohrung 3 von der Betätigungsseite aus als eine einfache Sacklochbohrung erzeugt, auf einen zusätzlichen Stopfen 19 kann verzichtet werden.

Bei Ausführungen gemäß Figuren 3 und 4 ist es des Weiteren zu beachten, dass die Schnittstelle 9 bei Betätigung des Kolbens 4 auf einer Betätigungsachse B wandert, welche achsparallel versetzt zur Zylinderbohrungsachse Z verläuft.

Fig.5 Um die Herstellung des Kolbens 4 an sich zu vereinfachen und auch die Herstellung eines Baukastens für Kolbenvarianten mit unterschiedlichen Außendurchmessern zu vereinfachen, kann der Kolben 4 mehrteilig gestaltet, aus zwei standardisierten Bauteilen montiert werden.

So werden der Antriebsabschnitt 7 und der Abtriebsabschnitt 8 als separate Bauteile hergestellt und anschließend zusammengefügt. Dabei kann beispielsweise der Antriebsabschnitt 7 mit der standardisierten Schnittstelle 9 und einem standardisierten Außendurchmesser ausgebildet sein, wogegen der Abtriebsabschnitt 8 mit einem für die jeweilige Ausführung des Bremsgerät 1 erforderlichen Kolbendurchmesser gestaltet werden.

Fig.6 Eine nicht koaxiale, radial versetzte Anordnung der Betätigungsachse B kann zu einer ungleichmäßigen, asymmetrischen Belastung der Dichtelement 18, 18' und dadurch einem erhöhten Verschleiß führen. Um dies zu vermeiden, kann die Schnittstelle 9 im Antriebsabschnitt 7 aus der Mittelachse A in die Zylinderbohrungsachse Z radial versetzt werden, sodass die Betätigungsachse B im Wesentlichen koaxial mit der Zylinderbohrungsachse Z verläuft.

### Bezugszeichen

- 1: Bremsgerät
- 2: Gehäuse
- 3: Zylinderbohrung
- 4: Kolben
- 5: Druckkammer
- 6: Betätigungsglied
- 7: Antriebsabschnitt
- 8: Abtriebsabschnitt
- 9: Schnittstelle
- 10: Führungsbuchse
- 11: Mantelfläche
- 12: Mantelfläche
- 13: Geberelement
- 14: Sensorelement
- 15: Druckmittelbehälter
- 16: Antriebseinheit
- 17: Elektronische Steuereinheit
- 18: Dichtelement
- 19: Stopfen
- 20: Ausschnitt
- A: Mittelachse
- B: Betätigungsrichtung
- Da: Durchmesser des Antriebsabschnitts
- Db: Durchmesser des Abtriebsabschnitts
- V: Versatz
- Z: Zylinderbohrungsachse
- y: Abstand zwischen Geberelement und Sensorelement.

## Patentansprüche

1. Bremsgerät (1) für eine Fahrzeugbremsanlage, mit einem Gehäuse (2), welches wenigstens eine Zylinderbohrung (3) mit einer Zylinderbohrungsachse (Z) aufweist, mit einem Kolben (4), welcher in der Zylinderbohrung (3) verschiebbar gelagert ist und darin eine Druckkammer (5) begrenzt, wobei der Kolben (4) durch ein Betätigungsglied (6) betätigbar ist, **dadurch gekennzeichnet, dass** das der Kolben (4) betätigungsseitig einen Antriebsabschnitt (7) zur Aufnahme einer Betätigungskraft aus dem Betätigungsglied (5) und druckkammerseitig einen Abtriebsabschnitt (8) zur Einleitung der Betätigungskraft in ein Druckmittel in der Druckkammer (5) aufweist, wobei im Antriebsabschnitt (7) eine Schnittstelle (9) zur Befestigung oder Abstützung des Betätigungsglieds (6) eingerichtet ist und der Antriebsabschnitt (7) derart ausgelegt ist, dass seine radiale Außenkontur eine Verdrehung des Abtriebsabschnitts (8) um die Zylinderbohrungsachse (Z) verhindert.

2. Bremsgerät (1) nach Anspruch 1 **dadurch gekennzeichnet, dass** in dem Gehäuse (2) eine gesonderte Führungsbuchse (10) zur Führung des Antriebsabschnitt (7) angeordnet ist, wobei die Führungsbuchse (10) Innenkontur aufweist, welche mit der Außenkontur des Antriebsabschnitts (7) korrespondiert.

3. Bremsgerät (1) nach wenigstens einem der vorstehenden Ansprüche **dadurch gekennzeichnet, dass** der Antriebsabschnitt (7) eine von einer Außenkontur des Abtriebsabschnitts (8) abweichende Außenkontur aufweist.

4. Bremsgerät (1) nach Anspruch 3 **dadurch gekennzeichnet, dass** der Antriebsabschnitt (7) eine erste zylindrische Mantelfläche (11) mit einer Mittelachse (A) und einem Durchmesser (Da) aufweist, der Abtriebsabschnitt (8) eine zweite zylindrische Mantelfläche (12) mit einem Durchmesser (Db) aufweist, wobei gilt Da<Db ist und die Mittelachse (A) zur Zylinderbohrungsachse (Z) mit einem Versatz (V) achsparallel versetzt angeordnet ist

5. Bremsgerät (1) nach Anspruch 4 **dadurch gekennzeichnet, dass** der Versatz (V) kleiner oder gleich (Db-Da)/2 ist.

6. Bremsgerät (1) nach wenigstens einem der vorstehenden Ansprüche **dadurch gekennzeichnet, dass** die Schnittstelle (9) entlang bei Betätigung des Kolbens (4) auf einer Betätigungsachse (B) wandert, wobei die Betätigungsachse (B) achsparallel versetzt zur Zylinderbohrungsachse (Z) angeordnet ist.

7. Bremsgerät (1) nach wenigstens einem der vorstehenden Ansprüche **dadurch gekennzeichnet, dass** der Antriebsabschnitt (7) und der Abtriebsabschnitt (8) als separate Bauteile vorgesehen sind, welche zur Bildung des Kolbens (4) zusammengefügt sind.

8. Bremsgerät (1) nach wenigstens einem der vorstehenden Ansprüche **dadurch gekennzeichnet, dass** im Abtriebsabschnitt (8) ein Geberelement (13) zur Erfassung von wenigstens einer Position des Kolbens (4) durch ein außerhalb der Zylinderbohrung (3) angeordnetes Sensorelement (14) positioniert ist.

9. Bremsgerät (1) nach Anspruch 8 **dadurch gekennzeichnet, dass** das Geberelement (13) in Bezug zur Zylinderbohrungsachse (Z) radial derart in Richtung Sensorelement (14) versetzt angeordnet ist, dass ein Radialabstand zwischen dem Geberelement (13) und der Mantelfläche (12) des Abtriebsabschnitts (8) in einem dem Sensorelement (13) zugewandten Abschnitt der Mantelfläche (12) am geringsten ist.
